# EUROPEAN PATENT SPECIFICATION

(11) **EP 1 298 909 B1**
(45) Date of publication and mention of the grant of the patent: **11.04.2007**
(21) Application number: 01123497.8
(22) Date of filing: 28.09.2001
(51) Int. Cl.: H04N 1/00

(54) **Mobile communications terminal**
Mobiler Kommunikationsterminal
Terminal mobil de communication

(43) Date of publication of application: 02.04.2003
(73) Proprietor: TELEFONAKTIEBOLAGET LM ERICSSON (publ), 164 83 Stockholm (SE)
(72) Inventor: Brunström, Leif, 17547 Järfälla (SE); Göjeryd, Anna, 16532 Tyresö (SE); Persson, Thomas, 17263 Sundbyberg (SE); Munther, Stefan, 16838 Bromma (SE)
(74) Representative: Bratt, Hanna Catharina

(56) References cited:
- DE-A- 19 638 882
- DE-A- 19 807 303
- JP-A- 2001 103 230

## Description

### Field of invention

The invention relates to mobile communications terminals and specifically to terminals which incorporate a camera.

### Background art

The increase in bandwidth available for mobile communication devices has paved the way for an ever diverse number of applications. Since by their nature mobile communications devices such as mobile phones are portable and readily available as they are typically carried around by the user, a particularly interesting application is that of a camera. A communications device that is able to capture and store an image is also capable of transmitting that image data to other devices. A telephone that incorporates a camera is for example described in EP 0 963 100. The telephone is formed in two parts, one of which slides over the other. A first part has a display, speaker and function keys on a front side and a camera lens on the rear side. The second part is connected to the rear of this first part and is slidable between a closed position wherein it covers the camera lens and an open position wherein the lens is exposed. The second part also includes a keypad, which faces in the same direction as the display of the first part and is exposed in the open position. US 6,122,526 also describes a mobile phone that includes a camera. In this arrangement, the camera lens is built-in to one end of the phone adjacent the antenna. In both these arrangements the device is primarily a telephone with a separate camera function. The user is thus required to perform the necessary selections before the device operates as a camera. Moreover, the requirement of a compact hand-held device providing all the functionalities of a mobile phone mean that size of the display in both cases is by necessity small and therefore impractical and uncomfortable to use as a viewfinder.

It is an object of the present invention to provide a mobile communications terminal incorporating a camera that is simple, intuitive and comfortable to use in all modes of operation.

This and further objects are achieved in the portable communications device according to the present invention. The device includes a body with front and rear faces, with a display and a speaker disposed substantially on the front face. The device further includes a keypad and includes a camera with a lens disposed substantially on a rear face of the body. A slidable element is connected to the body. This element is slidable between a closed position, in which it covers all but a reduced portion of said display, an open position, in which all the display is revealed and an intermediate position, in which the element covers part of the display and reveals an intermediate display portion. Moreover, the intermediate display portion is arranged to operate as a viewfinder for the camera.

In accordance with a further aspect of the invention there is proposed a portable communications device comprising a body with a display, a speaker, a camera with a lens, a keypad and a display cover that is slidably connected to the body. The display cover is arranged to move over the display between at least two positions. Furthermore, when the cover is in one of these positions, the camera is activated and the display operates as a viewfinder for the camera.

The provision of a sliding cover which may partially obscure the display means that the size of the display may be optimised for operating as a viewfinder, thus improving the ease of use of the camera. Moreover, the position of the sliding cover relative to the body of the device may advantageously be used as a selector to determine the operating mode. A user is thus not required to navigate a menu using function or alphanumeric keys when he desires to photograph an image. Rather the function of the device may be automatically selected simply by sliding the cover to a predetermined position that obscures a greater or lesser area of the display.

### BRIEF DESCRIPTION OF THE DRAWINGS

Further objects and advantages of the present invention will become apparent from the following description of the preferred embodiments that are given by way of example with reference to the accompanying drawings. In the figures:
- Fig. 1: schematically depicts a front view of a mobile phone in accordance with the present invention in a closed position,
- Fig. 2: schematically depicts a rear front view of the mobile phone of Fig. 1,
- Fig. 3: schematically depicts a front view of a mobile phone in accordance with the present invention in an open position,
- Fig. 4: schematically depicts a front view of a mobile phone in accordance with the present invention in an intermediate position,
- Fig. 5: schematically illustrates a side view of a mobile phone in accordance with the present invention in an intermediate position, and
- Fig. 6: is a schematic block diagram of the mobile communications terminal in accordance with the present invention.

### DETAILED DESCRIPTION OF THE DRAWINGS

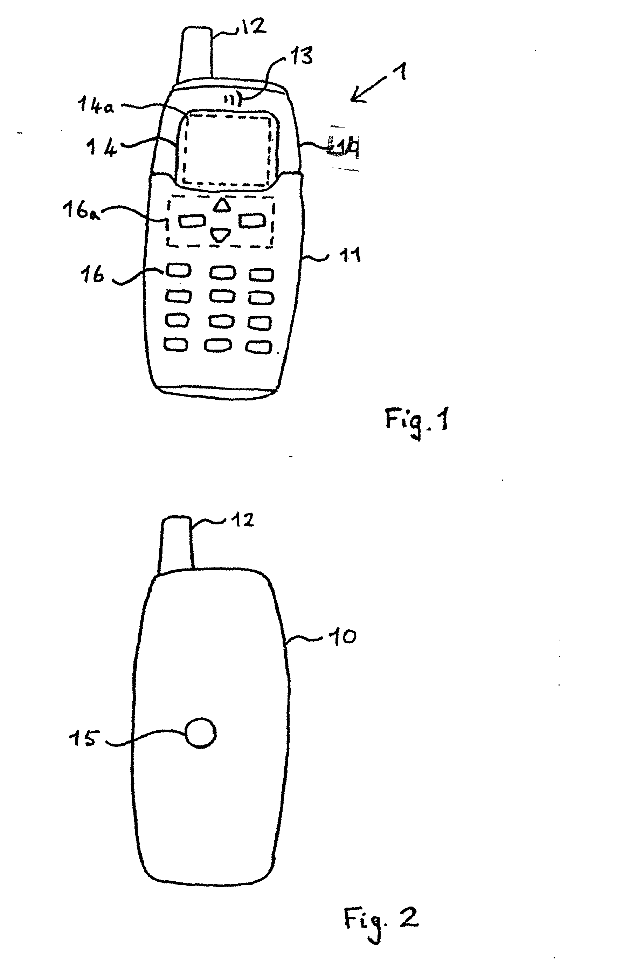

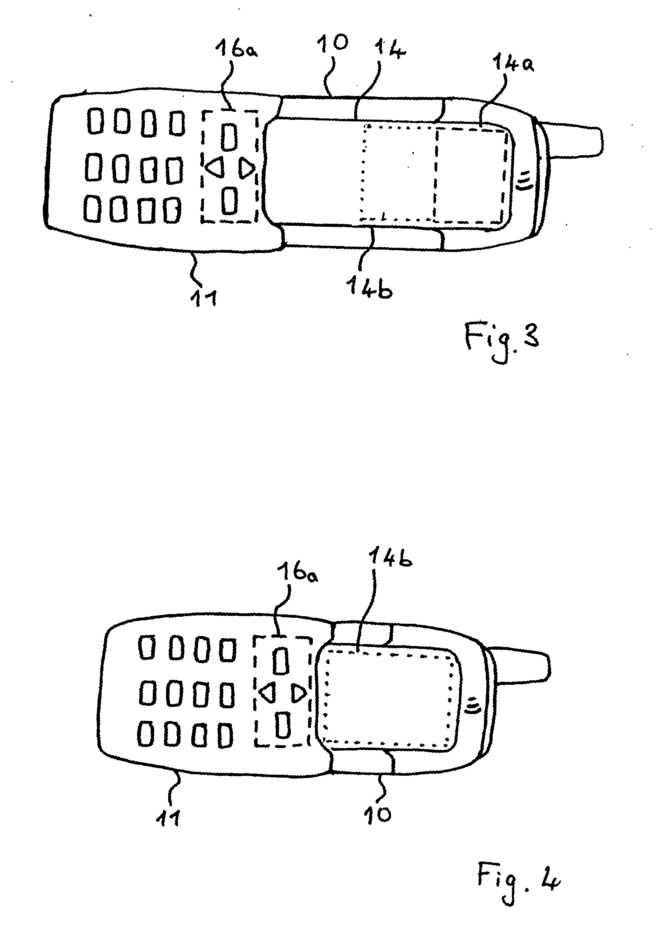

Fig 1 shows a frontal view of portable communications terminal 1 in accordance with a preferred embodiment of the present invention. The terminal is a mobile phone 1. The phone 1 is dimensioned to allow it to be held comfortably in one hand and includes a body 10 on which is mounted an antenna 12. On a front face of the body 10 there is provided a speaker 13 and display 14. A slidable element or cover 11 is attached to the body 10 by means of a sliding mechanism (not shown) disposed on either side of the display 14. This slidable element 11 can be moved into three distinct positions; a closed position as illustrated in Fig. 1 and two further positions, which will be described further with reference to Figs. 3 and 4. These positions are preferably predefined, for example by means of notches located at the desired position on the body 10 of the terminal 1 and mating projections provided on the sliding element 11 (see Fig. 5).

The slidable element 11 may also be positioned at any location between these three positions. As shown in Fig. 1, in the closed position, the sliding element 11 covers a portion of the body 10. This slidable element 11 also covers most of the display 14 leaving only a reduced area of the display exposed. This reduced area 14a is illustrated graphically by a dashed line in Fig. 1. The slidable element 11 is electrically connected to the body 10 and carries a keypad or keyboard 16 which are operative in all positions of the slidable element 11. This keypad 16 includes separate function keys or buttons 16a for rapid navigation on the display. When the sliding element 11 is in the closed position illustrated in Fig. 1, the terminal 1 is in a phone mode. In this mode the terminal 1 operates as a mobile phone and permits the user to place and receive calls and also to consult an address book using the limited display 14a available.

In addition to applications commonly available in mobile phones, the terminal 1 includes other applications typically provided by a personal organiser or palm computer. To this end it includes a modem (not shown) and also a range of related functionalities, such as internet access, for example using the WAP system, e-mail and SMS. In addition the phone 1 incorporates a camera. The camera is contained in the body 10 and includes an electronic imaging sensor, such as a charge coupled device (CCD) imaging sensor or another suitable image sensor and associated driving circuitry. The image sensor and its drive circuitry may advantageously be included on a circuit board that contains other circuits for the phone functions in order to save space. As shown in Fig. 2, a camera lens 15 is provided on the rear face of the body 10 of the phone 1. Although not illustrated in Fig. 2, a cover may be provided to protect the lens when not in use. This cover may be opened either manually or automatically by sliding it away from the lens when the camera is to be used. Alternatively the lens may be slightly inset to prevent damage to the lens when the terminal 1 is being used for other functions or when it is simply put down on the rear side or inadvertently dropped.

Although not illustrated in any of the figures, it will be understood that the phone 1 comprises a battery and a charge interface for charging the battery from the mains. Other interfaces may also be provided to permit a wire link to a PC or other computer. The phone 1 may also be provided with a wireless interface such as infrared, DECT or Bluetooth for connection to other devices.

Turning now to Fig. 3, the phone 1 is shown with the sliding element 11 in its fully open position. In this open position the display 14 is fully revealed. In this position, the terminal 1 activates a third mode in which it functions essentially as a personal organiser. In this mode, the display 14 operates as a touch screen and thus provides an additional keypad to the keypad 16 provided on the sliding element 11. The display 14 preferably displays a graphical user interface with icons or pictograms representing menu functions and applications that may be selected. Navigation and selection is performed by touching the area of the screen 14 displaying the desired function or additionally by using the function keys 16 provided on the sliding element 11. In this mode, the characters on the display 14 are oriented such that the phone must be turned onto its side as shown in Fig. 3.

Turning now to Fig. 4, the phone 1 is shown in a camera mode. In this position, the sliding element 11 is located substantially midway between the closed and open positions to reveal an intermediate portion 14b of the display. This intermediate portion 14b is shown by a dotted line. The intermediate display portion 14b is used as a viewfinder to display the image viewed through the camera lens 15. The dimensions of the intermediate display portion 14b are selected to provide the most comfortable size and shape for the viewfinder. The reduced display 14a is too narrow, while the whole display 14 is too wide. In this mode, one of the keys on the keypad 16 functions as a shutter release button; this key is preferably one of the function keys 16a. Alternatively, a special button may be provided that operates exclusively as a shutter release button. This special button need not be included in the keypad 16, but may instead be located on the side of the terminal, for example on the upper side of the body 10 when the terminal 1 is held sideways as shown in Fig. 4.

The camera mode is activated automatically as soon as the sliding element 11 is placed in the intermediate position. As soon as the camera mode is activated, the intermediate display portion 14b may function as a viewfinder and display the image viewed with the lens 15. In accordance with an alternative embodiment, the viewfinder operation may be started by depressing a designated key on the keypad 16 when the sliding element 11 is in the intermediate position. When operating in this mode, the phone 1 may advantageously be held sideways using two hands, so that one hand may hold the phone steady while the other operates the shutter release. However, the phone may equally be held by a single hand in the upright position. In this case, the shutter release key is preferably the right-hand function key when the phone 1 is viewed from the front. In this manner, the shutter release may be activated by the thumb, when holding the phone 1 in one hand.

The camera mode may also be started by the user when the phone is in the fully open position, however this mode is not started automatically, but must instead be selected using menu control. When in this fully open position, the intermediate display portion 14b indicated with a dotted line in Fig. 3 operates as the viewfinder for the camera.

The phone 1 is shown in side view in Fig. 5 with the sliding element 11 in the intermediate position. The sliding element 11 is provided with a pair of projections 30 which co-operate with pairs of notches 31 provided on either side of the display 14 at three locations along the sliding mechanism. As the sliding element 11 is moved into one of the three defined positions, the projections 30 slip into the notches 31 and prevent the sliding element 11 from slipping further. The relative positions of the sliding element 11 and body 10 may be altered by applying a light force in the required direction. It will be understood that providing complementary projections and notches are just one of a number of equivalent mechanical or other arrangements for semi-locking the movement of the sliding element 11.

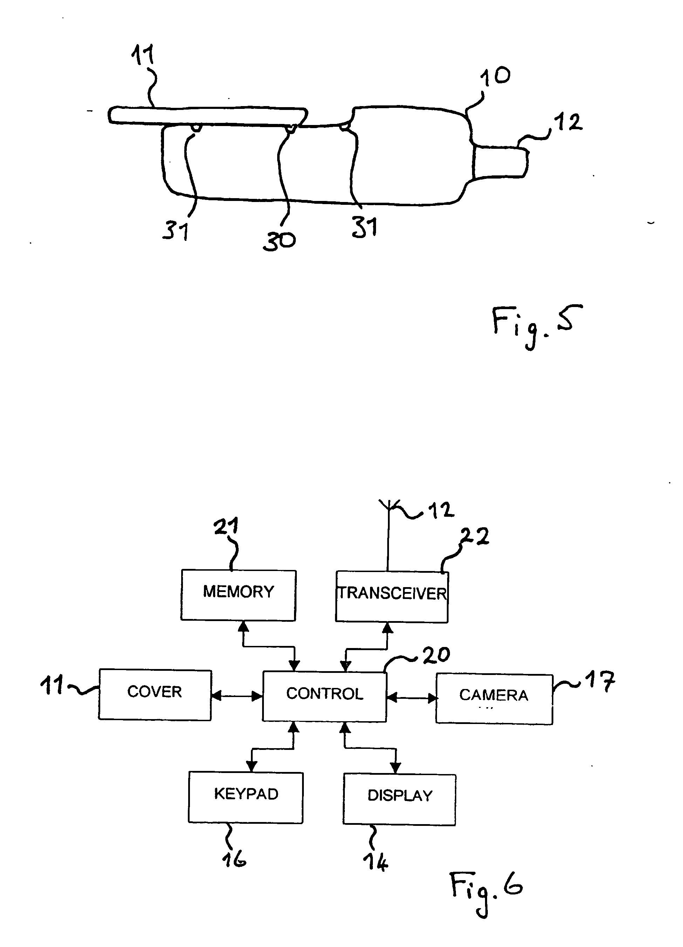

A block diagram of the principal functions of the mobile terminal 1 are illustrated in Fig. 6. The operation of the terminal is controlled by a controller 20. This interfaces with the various modules present in the terminal 1. These include the keypad 16, the display 14, a camera unit 17, which includes an image sensor, driver circuitry, a shutter mechanism and also the lens 15, a transceiver 22, which is connected to the antenna 12 and also to the speaker 13 and a microphone (not shown), the sliding element or cover 11 and a memory 21.

The position of the sliding element 11 is determined automatically, for example through sensors placed between the sliding element 11 and body 10 of the terminal 1. These sensors may take the form of electrical contacts placed on the projections 30 and notches 31. An electrical contact between the projections 30 and one of the pairs of notches 31 indicates the position the sliding element 11. The controller 20 receives the various positions of the sliding element, i.e. closed to reveal the reduced display 14a, open to show the full display 14 and in an intermediate position 14b, and activates the corresponding mode. In addition to controlling the content and format of information displayed on the display 14, the activated mode also determines the functions of the keypad 16 keys, since individual keys may have different functions in different modes. Moreover, since the display 14 operates as a touch screen at least when the terminal 1 is organiser mode, the information from the touch screen will also be communicated to the controller 20.

The intermediate display portion 14b is used as a viewfinder to display the image viewed through the camera lens 15. When the shutter is released by depressing the designated key, the captured image is frozen on the display 14b. The captured image may be stored in the memory 21. Preferably, the image is compressed to save memory space using a compression algorithm such as JPEG (Joint Photographers Experts Group). The stored image may also be transmitted to another device such as a PC or printer via the infrared or wireless link or to another mobile terminal or fax machine via air interface.

## Claims

1. A portable communications device including
a body (10) with front and rear faces and having a display (14) and a speaker (13) disposed substantially on said front face, a keypad (16) and a camera (17) with a lens (15), the lens being disposed substantially on the rear face of said body, **characterised by**
a slidable element (11) connected to said front face of said body and slidable between a closed position, in which said element covers all but a reduced portion (14a) of said display, an open position, in which substantially all said display is revealed and an intermediate position, in which said element covers part of the display and reveals an intermediate display portion (14b) that is larger than said reduced portion, and wherein said intermediate display portion is arranged to operate as a viewfinder for said camera.

2. A device as claimed in claim 1, wherein said display is arranged to operate as a viewfinder when a key of said keypad is pressed.

3. A device as claimed in any previous claim, wherein when operating as a viewfinder said display (14) is arranged to display an image viewed through said lens (15) on said intermediate display portion.

4. A device as claimed in claim 1, wherein said slidable element comprises at least part of said keypad.

5. A device as claimed in any previous claim, wherein said display is arranged to operate as a touch screen at least when said element is in said open position.

6. A device as claimed in any previous claim, wherein at least one key of said keypad (16) functions as a shutter release key when said element is in said intermediate position.

7. A device as claimed in any previous claim, further including sensors on at least one of said element 11 and said body 10 for registering the position of said element 11.

8. A portable communications device including
a body (10) having a display (14), a speaker (13), a camera with a lens (15), a keypad (16), **characterised by** a display cover (11) slidably connected to said body and being arranged to move over said display (14) between at least two positions, wherein when said cover is in one of said positions, the camera is activated and said display operates as a viewfinder for said camera.

9. A device as claimed in claim 8, **characterised in that** when said cover is in another of said positions, said device operates as a phone.

## Patentansprüche

1. Eine tragbare Kommunikations-Vorrichtung, einschließend einen Körper (10) mit Stirnseite (Vorderfläche) und Rückseite und aufweisend einen Display (14) und einen Lautsprecher (13), angeordnet im Wesentlichen auf der Stirnseite, eine Tastatur (16) und eine Kamera (17) mit einer Linse (15), die Linse im Wesentlichen auf der Rückseite des Körpers angeordnet, **gekennzeichnet durch**
ein verschiebbares Element (11), verbunden mit der Stirnseite des Körpers und verschiebbar zwischen einer geschlossenen Position, in welcher das Element alles außer einem reduzierten Bereich (14a) des Displays überdeckt, einer offenen Position, in welcher im Wesentlichen der gesamte Display offen gelegt ist und einer Zwischen-Position, in welcher das Element einen Teil des Displays überdeckt und einen Zwischen-Bereich des Displays (14b) offen legt, welcher größer ist als der reduzierte Bereich, und wobei der Zwischen-Bereich des Displays ausgestaltet ist, um als ein Sucher für die Kamera zu arbeiten.

2. Eine Vorrichtung nach Anspruch 1, wobei der Display angeordnet ist, um als ein Sucher zu arbeiten, wenn eine Taste der Tastatur gedrückt wird.

3. Eine Vorrichtung nach irgendeinem der Ansprüche 1 und 2, wobei der Display (14) ausgestaltet ist, um ein durch die Linse (15) gesehenes Bild in dem Zwischen-Bereich des Displays darzustellen, wenn der Display als Sucher arbeitet.

4. Eine Vorrichtung nach Anspruch 1, wobei das verschiebbare Element zumindest einen Teil der Tastatur umfasst.

5. Eine Vorrichtung nach irgendeinem der Ansprüche 1 bis 4, wobei der Display ausgestaltet ist, um als ein Berührungsempfindlicher Schirm zu arbeiten, zumindest wenn das Element sich in der offenen Position befindet.

6. Eine Vorrichtung nach irgendeinem der Ansprüche 1 bis 5, wobei zumindest eine Taste der Tastatur (16) als eine Verschluss-Auslöse-Taste wirkt, wenn das Element sich in der Zwischen-Position befindet.

7. Eine Vorrichtung nach irgendeinem der Ansprüche 1 bis 6, außerdem einschließend Sensoren auf zumindest einem von beiden, dem Element 11 und/oder dem Körper 10, für das Registrieren der Position des Elements 11.

8. Eine tragbare Kommunikations-Vorrichtung, einschließend einen Körper (10), aufweisend einen Display (14), einen Lautsprecher (13), eine Kamera mit einer Linse (15), eine Tastatur (16), **gekennzeichnet durch** eine Display-Abdeckung (11), verschiebbar gegenüber dem Körper, und ausgestaltet, um sich über den Display (14) zwischen zumindest zwei Positionen zu bewegen, wobei die Kamera aktiviert ist und der Display als Sucher für die Kamera arbeitet, wenn sich die Abdeckung in einer der Positionen befindet.

9. Eine Vorrichtung nach Anspruch 8, **dadurch gekennzeichnet, dass** die Vorrichtung als Telefon arbeitet, wenn sich die Abdeckung in einer von den genannten Positionen verschiedenen Position befindet.

## Revendications

1. Dispositif de communication portable comprenant :
un corps (10) doté de faces avant et arrière et ayant un dispositif d'affichage (14) et un haut-parleur (13) disposés sensiblement sur ladite face avant, un clavier (16) et un appareil photo (17) doté d'un objectif (15), l'objectif étant disposé sensiblement sur la face arrière dudit corps, **caractérisé par**
un élément coulissant (11) relié à ladite face avant dudit corps et pouvant coulisser entre une position fermée, dans laquelle ledit élément recouvre tout sauf une partie réduite (14a) dudit dispositif d'affichage, une position ouverte, dans laquelle pratiquement tout ledit dispositif d'affichage est découvert et une position intermédiaire, dans laquelle ledit élément recouvre une partie du dispositif d'affichage et découvre une partie intermédiaire (14b) du dispositif d'affichage qui est plus grande que ladite partie réduite, et dans lequel ladite partie intermédiaire du dispositif d'affichage est configurée pour fonctionner comme viseur dudit appareil photo.

2. Dispositif selon la revendication 1, dans lequel ledit dispositif d'affichage est configuré pour fonctionner comme viseur lorsqu'une touche dudit clavier est enfoncée.

3. Dispositif selon l'une quelconque des revendications précédentes, dans lequel, lorsqu'il fonctionne comme viseur, ledit dispositif d'affichage (14) est configuré pour afficher une image vue à travers ledit objectif (15) sur ladite partie intermédiaire du dispositif d'affichage.

4. Dispositif selon la revendication 1, dans lequel ledit élément coulissant comprend au moins une partie dudit clavier.

5. Dispositif selon l'une quelconque des revendications précédentes, dans lequel ledit dispositif d'affichage est configuré pour fonctionner comme écran tactile au moins lorsque ledit élément est dans ladite position ouverte.

6. Dispositif selon l'une quelconque des revendications précédentes, dans lequel au moins une touche dudit clavier (16) fonctionne comme touche de libération d'obturateur lorsque ledit élément est dans ladite position intermédiaire.

7. Dispositif selon l'une quelconque des revendications précédentes, comprenant en outre des capteurs sur au moins l'un dudit élément (11) et dudit corps (10) pour aligner la position dudit élément (11).

8. Dispositif de communication portable comprenant :
un corps (10) ayant un dispositif d'affichage (14), un haut-parleur (13), un appareil photo doté d'un objectif (15), un clavier (16), **caractérisé par** un cache de dispositif d'affichage (11) raccordé de manière coulissante audit corps et configuré pour se déplacer au-dessus dudit dispositif d'affichage (14) entre au moins deux positions, dans lequel, lorsque ledit cache est dans l'une desdites positions, l'appareil photo est activé et ledit dispositif d'affichage fonctionne comme viseur dudit appareil photo.

9. Dispositif selon la revendication 8, **caractérisé en ce que** lorsque ledit cache est dans une autre desdites positions, ledit dispositif fonctionne comme téléphone.
